# EUROPÄISCHE PATENTSCHRIFT

(11) **EP 4 701 978 B1**
(45) Veröffentlichungstag und Bekanntmachung des Hinweises auf die Patenterteilung: **11.11.2026**
(21) Anmeldenummer: 24724074.0
(22) Anmeldetag: 25.04.2024
(51) Int. Cl.: B66F 9/06, B66F 9/075

(54) **ANTRIEBSSYSTEM FÜR AUTONOM BETREIBBARE TRANSPORTEINRICHTUNGEN**
DRIVE SYSTEM FOR TRANSPORT DEVICES WHICH CAN BE OPERATED AUTONOMOUSLY
SYSTÈME D'ENTRAÎNEMENT POUR DISPOSITIFS DE TRANSPORT POUVANT FONCTIONNER EN AUTONOMIE

(30) Priorität: 25.04.2023 AT 503092023
(43) Veröffentlichungstag der Anmeldung: 04.03.2026
(73) Patentinhaber: AGILOX Systems GmbH, 4671 Neukirchen bei Lambach (AT)
(72) Erfinder: SCHWAIGER, Meinhard, 4040 Linz (AT)
(74) Vertreter: Babeluk Patentanwälte GmbH
(86) Internationale Anmeldenummer: PCT/AT2024/060172
(87) Internationale Veröffentlichungsnummer: WO 2024/221032

(56) Entgegenhaltungen:
- EP-A1- 4 137 443
- WO-A1-2017/102092
- WO-A1-2018/136987
- CN-A- 111 924 003
- DE-A1- 102013 102 428

## Beschreibung

Die Erfindung betrifft ein Antriebssystem für autonom betreibbare Transporteinrichtungen, gemäß Patentanspruch 1.

Insbesondere betrifft die Erfindung ein verbessertes mehrachsig gelagertes Antriebssystem für Transporteinrichtungen, zum vorzugsweise autonomen kollisionsfreien und beschädigungsfreien Aufnehmen, Befördern und Abgeben von Transportgütern, sodass auch einschenkelig (einkufig) bzw. mit geringer Breite ausgeführte Transporteinrichtungen uneingeschränkt manövrierfähig sind, d.h. vor-/rückwärts und aus dem Stand ausgehend von einer ersten Fahrtrichtung in eine beliebige zweite Fahrtrichtung bspw. 90° quer verfahrbar sind und sich im Stand um eine beliebige vertikale Drehachse drehen können, und sämtliche Antriebsräder und Stützräder unabhängig von deren Verschleißzustand auch bei unebenen Bodenverhältnissen vollen Bodenkontakt aufweisen und somit zuverlässig ein stabiles Fahrverhalten, also ein präzises Fahren entlang vorgegebener Routen/Trajektorien frei von Pendel- und Gier-/Schlingerbewegungen (Enten- bzw. Pinguin-Gang) zu ermöglichen. Erfindungsgemäß wird dies dadurch gelöst, dass die aus Stützrädern und Antriebsrädern gebildeten Systeme mittels Gelenken mit dem Fahrwerk der Transporteinrichtung derart verbunden sind, dass ein statisch bestimmtes System entsteht, bei dem die Stützräder und die Antriebsräder in jeder Situation auf ebenen und unebenen Fahrböden mit dem Fahrboden einen definierten Bodenkontakt aufweisen.

Zum Stand der Technik offenbart die GB 820 228 A (J. B. Curry) ein manuell geführtes Hub- und Transportgerät mit zwei von den Hubgabeln seitlich nach auswärts beabstandeten Schenkeln, in deren Endbereichen und im mittleren Bereich des die beiden Schenkel verbindenden Quersteges jeweils eine lenkbare Radeinheit gelagert ist. Nachteilig ist die Einschränkung der Bewegungsfreiheit auf einfachste Fahrmanöver (vor-/rückwärts, Kurvenfahrt).

Aus der DE 20 2013 007 279 U1 (Grenzebach) ist eine Vorrichtung zum Befördern von Lastregalen mittels eines Trägerfahrzeuges auf unebener Bodenfläche bekannt, aufweisend zwei unabhängig in zueinander parallelen Ebenen mittels jeweils einer gesonderten Drehachse und einem Querlenker vertikal schwenkbaren und einzeln angetriebenen Antriebsräder, wobei die Antriebsräder jeweils mittels einer Feder und dem Hebelmechanismus gegen den Boden angedrückt werden, und wobei zur Stabilisierung das Trägerfahrzeug mit einem vorderen und einem hinteren Stützrad ausgeführt ist. Nachteilig ist die statische Überbestimmtheit des Systems, bei dem ein Ausgleich von Bodenunebenheiten mittels Federelementen erfolgt, die zu last- und schwerpunktabhängigen Schwingungen im Fahrbetrieb führen (Feder-Masse-System), und die stark eingeschränkten Fahrmanöver (so sind bspw. Querfahrten aus dem Stand nicht möglich).

Die DE 10 2007 046 868 A1 (Universität Stuttgart), DE 10 2013 017 062 A1 (Eisenmann), DE 20 2014 006 562 U1 (Eisenmann), DE 10 2014 106 033 A1 (Pester Pac), EP 2 190 714 B1 (Univ. Stuttgart), WO 2009/043474 (Univ. Stuttgart), EP 3 020 614 A1 (Eisenmann), WO 2016/082917 A1 (Eisenmann) offenbaren Transporteinrichtungen bzw. Fördereinrichtungen für Ladungsträger, bestehend aus jeweils zwei einzelnen Fördereinheiten, die mit jeweils zwei um eine vertikale Achse drehbare Antriebseinheiten mit zwei unabhängig voneinander antreibbaren Rädern ausgeführt sind. Die Fördereinheiten können einzeln betrieben werden, wobei die einzelne Fördereinrichtung sowohl auf ebener als auch auf unebener Fahrbahn in Abhängigkeit von der Stellung der Drehachsen der Antriebsräder der beiden Antriebseinheiten zueinander statisch instabil wird, sodass nur eingeschränkte Fahrmanöver ausgeführt werden können; so sind bspw. eine Querfahrt und präzise Kurvenfahrten wegen der Kippgefahr nicht möglich.

Die EP 3 426 593 B1 (Melkus) offenbart ein fahrerloses Transportfahrzeug zum Fördern eines Ladungsträgers, bei dem zwei einzelne Fahrwerksschenkel mit jeweils zwei um eine Vertikalachse drehbaren Differentialantrieben ausgeführt sind, und wobei die Fahrwerksschenkel mittels mehrerer Hydraulikzylinder mit einem U-förmigen Ladungsträger verbunden sind. Damit die Antriebsräder der Differentialantriebe unabhängig von Bodenunebenheiten gleichmäßigen Bodenkontakt aufweisen, ist ein Steuerungs- und Messsystem vorgesehen, das mittels der Hydraulikzylinder Bodenunebenheiten ausgleicht.

Die DE 10 2014 017 532 B3 (KUKA) offenbart ein Niederflurtransportsystem bestehend aus mindestens einem Antriebsmodul und einem Tragmodul, bei dem die Antriebs-Basis und die Trag-Basis bzgl. einer Hubeinrichtung fest miteinander verbunden sind und das Antriebs-Fahrwerk mittels einer Hubeinrichtung (Gasfeder, Feder) beweglich gelagert ist. Nachteilig ist neben der Vielzahl an Drehgelenken das Gas-Federelement, das zu einem masseabhängigen Schwingungsverhalten des Gesamtsystems führt.

Die DE 10 2020 006 337 A1 (Metra Labs) offenbart ein autonomes Flurförderzeug mit zwei nichtlenkbaren, einzeln antreibbaren Antriebsrädern, angeordnet jeweils seitlich hinter einer Ladefläche, unter der sich im vorderen Bereich mittig eine Gelenkrolle befindet. Damit ist ein stabiles System definiert, bei dem in jeder Situation bei Bodenunebenheiten sämtliche Räder definierten Bodenkontakt aufweisen, jedoch sind nur sehr eingeschränkte Fahrmanöver möglich und das Flurförderzeug weist eine große Gesamtbreite auf.

Die GB 2 183 566 A (Yoshida) offenbart einen lenkbaren Transportwagen mit zwei individuell antreibbaren Antriebsrädern und zwei vertikal drehbaren Stützrädern. Die beiden Antriebsräder sind parallel seitlich unterhalb des Fahrgestells jeweils in einer Wippe, mit einer parallel zur Fahrbahnebene ausgerichteten Achse, gelagert, wobei die Wippe mit einem ersten Stützrad ausgeführt ist. Von dieser Einheit jeweils in Fahrtrichtung beabstandet ist ein jeweils zweites Stützrad vorgesehen, das relativ zum Fahrgestell vertikal starr angeordnet ist. Das System, bestehend aus insgesamt zwei Antriebsrädern und vier Stützrädern ist statisch überbestimmt, sodass bei Bodenunebenheiten von den beiden starr am Fahrgestell angeordneten Stützrädern nur eines davon Bodenkontakt aufweist und somit ein seitliches Kippen ermöglicht. Des Weiteren kann der Transportwagen nur einfachste Fahrmanöver ausführen (vor-/rückwärts, Kurvenfahrt).

Die WO 2017/102092 A1 (SEW) offenbart ein Transportsystem, gemäß dem Oberbegriff von Anspruch1, mit zwei unabhängig voneinander angesteuerten Differentialantrieben mit zwei Antriebsrädern, die in einem Transportgestell in Längsrichtung voneinander beabstandet angeordnet sind und vier drehbaren Stützrädern, die paarweise seitlich von den Differentialantrieben ebenfalls starr in dem Transportgestell angeordnet sind. Damit liegt ein statisch überbestimmtes System vor, das Bodenunebenheiten nicht ausgleichen kann.

Die WO 2019/009729 A2 (Eurotec) offenbart ein Roboterfahrzeug mit einem starren viereckigen Rahmen, an dem jeweils in den vier Ecken ein lenkbares Antriebsrad angeordnet ist. Die starre Lagerung der Antriebsräder führt zu einer statischen Überbestimmung, sodass Bodenunebenheiten nicht ausgeglichen werden können und je nach Bodenbeschaffenheit ein oder zwei Antriebsräder keinen Bodenkontakt aufweisen. Damit ist ein präzises Fahren entlang vorgegebener Trajektorien nicht möglich.

Die WO 2018/136987 A (AGILOX) offenbart ein Fahrwerk für Transportvorrichtungen, dessen drehbare Räder auf einer gemeinsamen Drehachse angeordnet sind und mittels eines Innenringes um eine im Wesentlichen vertikale Drehachse und um eine dazu senkrechte Schwenkachse schwenkbar gelagert sind. Innerhalb der Transportvorrichtung sind die Fahrwerke starr angeordnet.

Die EP 3 689 812 A1 (Jungheinrich), AT 523 117 A1 (KNAPP) offenbaren ein Flurförderzeug mit einem mehrrädrigen Fahrwerk, wobei das Fahrwerk zwei Schenkel aufweist, in deren vorderen Endbereich bzw. mittlerem Bereich jeweils ein lenkbares Lastrad und in dem mittleren Bereich des die beiden Schenkel verbindenden Abschnittes ein lenkbares Antriebsrad angeordnet sind. Damit ist ein statisch bestimmtes System gegeben, sodass bei Bodenunebenheiten sämtliche Räder vollen Bodenkontakt aufweisen, jedoch sind damit nur einfachste Fahrmanöver möglich (vor-/rückwärts, eingeschränkte Kurvenfahrt).

Die WO 2021/204507 A1 (Hubtex) offenbart ein Flurförderzeug mit einem Fahrzeugrahmen, bestehend aus zwei Schenkeln und einer endseitigen Querverbindung, mit zwei lenkbaren Antriebsrädern in der Querverbindung und zwei nichtlenkbaren Stützrädern, jeweils einem im Endbereich der Schenkel. Für den Ausgleich von Bodenunebenheiten sind die Stützräder jeweils in einer Wippe gelagert und werden jeweils mit einem Hubmotor angetrieben. Nachteilig sind die eingeschränkten Fahrmanöver (vor-/rückwärts, einfache Kurvenfahrten) und die erforderlichen Vertikalantriebe für den Ausgleich von Bodenunebenheiten.

Nachteilig bei den bekannten Systemen sind deren statische Über- bzw. Unterbestimmtheit, das Erfordernis zusätzlicher elektronisch gesteuerter Einrichtungen für den Ausgleich von Bodenunebenheiten, oder die Baubreite im Verhältnis zum Transportgut, oder die Einschränkung ausführbarer Fahrmanöver auf Vorwärts-/Rückwarts- und einfachste Kurvenfahrten (keine Querfahrt, Schrägfahrt, Drehen am Stand, ...).

Aufgabe der Erfindung ist es, diese Nachteile zu vermeiden und ein stabiles Fahrverhalten von Transporteinrichtungen auf ebenen und unebenen Bodenverhältnissen unabhängig vom Verschleißzustand der Räder zu ermöglichen. Gleichzeitig soll unabhängig von eventuellen Bodenunebenheiten stets eine sichere Übertragung des Antriebsmoments von den Rädern auf den Boden sichergestellt werden.

Diese Aufgabe wird durch durch die Merkmale von Patentanspruch 1 gelöst, dass zumindest die zweite Antriebseinheit in einem Gehäuse drehbar gelagert ist, das am Fahrgestell gelagert ist, und dass beidseits der Längsachse des Fahrgestells Stützräder angeordnet sind.

Damit wird ein verbessertes mehrachsig gelagertes Antriebssystem für Transporteinrichtungen dargestellt, zum vorzugsweise autonomen kollisionsfreien und beschädigungsfreien Aufnehmen, Befördern und Abgeben von Transportgütern, sodass auch einschenkelig (einkufig) bzw. mit geringer Breite ausgeführte Transporteinrichtungen uneingeschränkt manövrierfähig sind, d.h. vor-/rückwärts und aus dem Stand ausgehend von einer ersten Fahrtrichtung in eine beliebige zweite Fahrtrichtung bspw. 90° quer verfahrbar sind und sich im Stand um eine beliebige vertikale Drehachse drehen können, und sämtliche Antriebsräder und Stützräder unabhängig von deren Verschleißzustand auch bei unebenen Bodenverhältnissen vollen Bodenkontakt aufweisen und somit zuverlässig ein stabiles Fahrverhalten, also ein präzises Fahren entlang vorgegebener Trajektorien frei von Pendel- bzw. Gier-/Schlingerbewegungen (Enten- bzw. Pinguin-Gang) ermöglichen.

Wesentlich an der vorliegenden Erfindung ist die Kombination einer mehrfach gelenkig ausgeführten Antriebseinheit, die einen omnidirektionalen Vortrieb ermöglicht, mit seitlichen Stützrädern, eine Absicherung gegen ungleiche Lastverteilungen oder Massenkräfte bei der Kurvenfahrt bieten.

In einer ersten bevorzugten Ausführungsvariante der Erfindung ist vorgesehen, dass eine zweite Antriebseinheit um eine im Wesentlichen vertikale Drehachse drehbar und um eine zweite Achse frei pendelnd in einem Gehäuse gelagert ist und das Gehäuse frei in einer im Wesentlichen vertikalen Ebene relativ zum Fahrwerk/Fahrgestell pendelnd um die Pendelachse gelagert oder elastisch verformbar ist und dass an dem Gehäuse Stützräder angeordnet sind.

Wesentlich an dieser Ausführungsvariante der Erfindung ist, dass die eine Antriebseinheit, deren Gehäuse mit den Stützrädern versehen ist gemeinsam mit diesen Stützrädern ein statisch bestimmtes System bildet, d.h., dass auch im Fall von Bodenunebenheiten alle Räder (die Antriebsräder und die Stützräder) ohne wesentliche Veränderung der Kraftverhältnisse die Gewichtskräfte auf den Boden übertragen.

Ein präzises, uneingeschränkt omnidirektionales Fahren entlang beliebiger vorgegebener Trajektorien, ein Drehen am Stand um eine beliebige Drehachse und ein 90° Querfahren oder Schrägfahren aus einer beliebigen ersten Fahrtrichtung wird dadurch erreicht, dass die Transporteinrichtung mindestens zwei unabhängig voneinander lenkbare Antriebseinheiten, die, entsprechend der Geometrie der Transporteinrichtung, möglichst weit voneinander entfernt angeordnet sind, und eine Stützradeinrichtung aufweist. Für eine besonders schmale Bauweise der Transporteinrichtung sind exakt zwei, möglichst weit voneinander entfernt angeordnete lenkbare Antriebseinheiten vorgesehen und eine Stützradeinrichtung, bestehend aus mindestens zwei drehbaren Stützrädern, die jeweils links bzw. rechts möglichst weit entfernt von der Ebene, die im Wesentlichen von den vertikalen Drehachsen der beiden lenkbaren Antriebseinheiten gebildet wird, angeordnet sind. Die lenkbare Antriebseinheit ist mit einem oder mit zwei angetriebenen Antriebsrädern ausgeführt, wobei die Achsen der Antriebsräder vorzugsweise parallel zur Fahrbahn ausgerichtet sind und um eine zweite Achse, die im Wesentlich vertikal zur Fahrbahn ausgerichtet ist, drehbar zum Zwecke der Richtungsänderung gelagert sind. In einer ersten Ausführungsvariante ist die Antriebseinheit mit nur einem Antriebsrad ausgeführt, das relativ zur vertikalen Drehachse vorzugsweise mittig angeordnet ist, und die Fahrtrichtungsänderung erfolgt mit einem separaten Antrieb, vorzugsweise einem Elektroantrieb. In einer besonders bevorzugten Ausführungsvariante ist die Antriebseinheit mit zwei Antriebsrädern ausgeführt, die unabhängig voneinander vorzugsweise mit jeweils einem Elektromotor angetrieben werden, und wobei die Fahrtrichtungsänderung über Drehzahl- und Drehrichtungsanpassung der Antriebsräder erfolgt. Für einen optimalen Kontakt der beiden Antriebsräder auf unebenen Fahrbahnen oder anderer Art von Bodenunebenheiten wie bspw. infolge Fremdkörper auf der Fahrbahn weist die besonders bevorzugte Ausführungsvariante der Antriebseinheit eine Kippachse auf, die vorzugsweise in einem Winkel von 90° zur Drehachse der beiden Antriebsräder und vorzugsweise parallel zur Fahrbahn ausgerichtet ist.

Die Stützradeinrichtung besteht in einer bevorzugten Ausführungsvariante aus zwei drehbaren Stützrädern, die seitlich links bzw. rechts von der Ebene, die die beiden vertikalen Drehachsen der Antriebseinheiten verbindet, beabstandet angeordnet sind. In einer besonders bevorzugten Ausführungsvariante bestehen die drehbaren Stützräder aus jeweils zwei Rädern, die parallel auf einer gemeinsamen Stützrad-Drehachse angeordnet sind, mit einer vorzugsweise mittig zwischen den beiden Rädern angeordneten Kippachse, die vorzugsweise in einem Winkel von 90° zur Drehachse der beiden Räder und vorzugsweise parallel zur Fahrbahn ausgerichtet ist und mit einer vertikalen Drehachse ausgeführt sind, wobei die vertikale Drehachse vorzugsweise in einem Winkel von 90° zur Kippachse und in einem definierten Abstand von der Drehachse der Räder angeordnet ist, wobei dieser Abstand zwischen 0 und dem Durchmesser des Stützrades beträgt, vorzugsweise zwischen > 0 und dem halben Durchmesser des Stützrades.

Eine besonders bevorzugte Ausführungsvariante der Erfindung sieht vor, dass die erste und/oder die zweite Antriebseinheit in einem um die senkrechte Drehachse drehbaren Ringelement um eine Kippachse schwenkbar gelagert ist. Durch die Drehung des Ringelements wird die Lenkbewegung der Antriebsräder bewirkt. Die Antriebseinheit ist darin schwenkbar gelagert, wobei die Kippachse bei Geradeausfahrt mit der Längsachse des Fahrzeugs zusammenfällt.

Es ist möglich, dass die zweite Antriebseinheit auf einer Schulter oder in einer Nut im Gehäuse drehbar und schwenkbar gelagert ist. Vorzugsweise ist dabei die erste und/oder die zweite Antriebseinheit gegenüber dem Gehäuse durch mehrere Stützrollen radial abgestützt. Dies kann beispielsweise so verwirklicht werden, dass die Antriebseinheit zwei diametral angeordnete Tragrollen aufweist, die in der Nut ablaufen, um die Drehbewegung zu ermöglichen und gleichzeitig eine Schwenkbewegung um die Kippachse zulassen. Die Kräfte in Längsrichtung und in Querrichtung werden durch Stützrollen aufgenommen, die sich an einer Umfangsfläche im Gehäuse abstützen.

Vorzugsweise sind die Stützräder seitlich am Gehäuse angeordnet und sind jeweils um eine vertikale Drehachse gegenüber dem Gehäuse schwenkbar. Alternativ ist auch eine Lagerung am Fahrgestell möglich. Insbesondere sind dabei die Stützräder um eine Stützrad-Drehachse drehbar, die die vertikale Drehachse in einem Abstand kreuzt. Damit wird sichergestellt, dass sich die Stützräder an die jeweilige Bewegungsrichtung des Gehäuses selbsttätig anpassen, wie dies beispielsweise bei Rollen von Bürosesseln der Fall ist.

Eine besonders begünstigte Ausführungsvariante der Erfindung ist dadurch gegeben, dass die vertikale Drehachse einen Abstand zu der Gehäuse-Kippachse aufweist, der kleiner ist als der Abstand der vertikalen Drehachse zu der senkrechten Drehachse. Dies bedeutet, dass die Gehäuse-Kippachse bei der die Gewichtskräfte eingeleitet werden, zwischen der vertikalen Drehachse, bei der ein Teil der Gewichtskraft auf die Stützräder übertragen wird, und der senkrechten Drehachse, bei der der übrige Teil der Gewichtskraft auf die Antriebsräder übertragen wird, liegt. Das Gehäuse bildet somit einen zweiarmigen Hebel, und die Kraftverhältnisse ergeben sich gemäß dem Hebelgesetz aus der Geometrie.

Ein besonders guter Ausgleich von Bodenunebenheiten wird erreicht, wenn die Stützräder um eine im Wesentlichen horizontale Kippachse kippbar sind.

Ein erfindungsgemäßes Antriebssystem kann je nach Ausführung mit einer oder mit zwei der oben beschriebenen Gehäuse mit Stützrädern ausgebildet sein.

Eine weitere bevorzugte Ausführungsvariante der Erfindung sieht vor, dass das Gehäuse vertikal beweglich und vorzugsweise gefedert gegenüber dem Fahrgestell gelagert ist. Bei dieser bevorzugten Variante liegt nicht ein statisch bestimmtes System vor, da die Antriebsräder durch Federkraft auf den Boden gepresst werden. Dadurch kann bei entsprechender Auslegung der Feder (langer Federweg) eine weitgehend konstante Anpresskraft erreicht werden.

Insbesondere ist es in diesem Zusammenhang günstig, wenn die Stützräder seitlich am Fahrgestell angeordnet sind und jeweils um eine vertikale Drehachse gegenüber dem Fahrgestell schwenkbar sind. Somit definieren die Stützräder direkt die Positionierung des Fahrgestells in Bezug auf die Längsachse.

Eine weitere alternative Ausführungsvariante sieht vor, dass das Gehäuse um eine horizontale Achse (ident mit bzw. analog zu Gehäuse-Kippachse) schwenkbar und gefedert gegenüber dem Fahrgestell gelagert ist. An der Stelle einer linearen vertikalen Beweglichkeit wie bei der zuvor beschriebenen Ausführungsvariante tritt hier eine Schwenkbewegung. Diese Lösung ist konstruktiv mit geringerer Bauhöhe darstellbar.

Die vorliegende Erfindung betrifft auch eine Transporteinrichtung mit einem oben beschriebenen Antriebssystem. Erfindungsgemäß ist ein Ladungsträger vorgesehen, der gegenüber dem Antriebssystem vertikal beweglich ist. Damit können in an sich bekannte Weise Paletten unterfahren und angehoben werden, um sie zu transportieren.

Für einen vollumfänglichen Bodenkontakt sowohl sämtlicher Antriebsräder als auch sämtlicher Stützräder auf unebenen Fahrbahnen oder anderer Art von Bodenunebenheiten wie bspw. infolge Fremdkörper auf der Fahrbahn weist die besonders bevorzugte Ausführungsvariante der Transporteinrichtung eine zusätzliche Kippachse auf, die vorzugsweise parallel zur Fahrbahnebene und in einem Winkel von vorzugsweise 90° zu der Ebene, die im Wesentlichen von den vertikalen Drehachsen der beiden lenkbaren Antriebseinheiten gebildet wird, angeordnet ist und eine gemeinsame Kippbewegung einer Antriebseinheit und den mit ihr verbundenen Stützrädern relativ zu dem Fahrgestell der Transporteinrichtung ermöglicht. In dieser Ausprägung ist das physikalische Gleichgewicht verbundener Systeme nach der Formel $a + z = 3 n$ (1) erfüllt (mit a: Anzahl der Systeme, z: Anzahl der Lagerreaktionen, n: Anzahl der Zwischenreaktionen an den Schnittstellen).

In einer weiteren Ausführungsvariante kann die Kippachse durch elastisch verformbare Fahrwerkselemente, wie bspw. elastisch verformbare Fahrwerksschenkel, oder Federungselementen ersetzt sein.

Im Sinne der Erfindung bezieht sich die Richtungsangabe horizontal auf eine im Wesentlichen parallele Ausrichtung zur Fahrbahnebene und die Richtungsangabe vertikal auf eine im Wesentlichen senkrechte Ausrichtung zur Fahrbahnebene.

Die Erfindung wird im Folgenden anhand des nicht einschränkenden Ausführungsbeispiels mit den zugehörigen Figuren näher erläutert. Es zeigen:

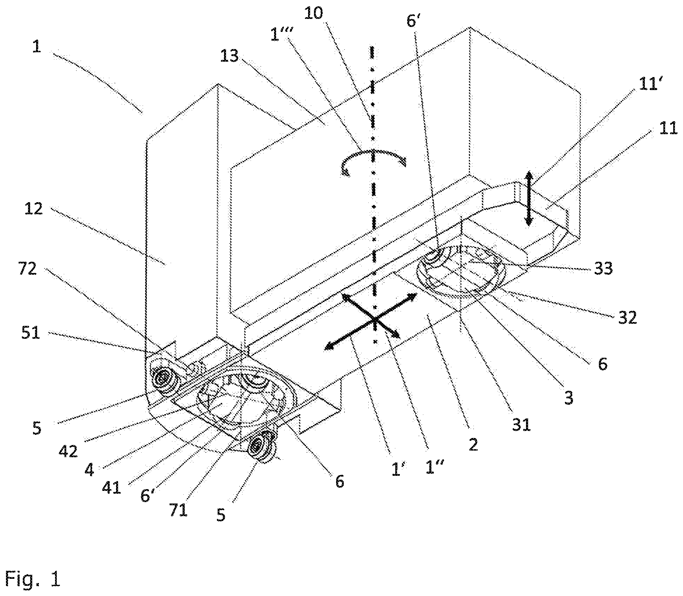

- Fig. 1: eine erfindungsgemäße Transporteinrichtung mit Transportgut gemäß einer ersten Ausführungsvariante der Erfindung in einer Schrägansicht von unten;

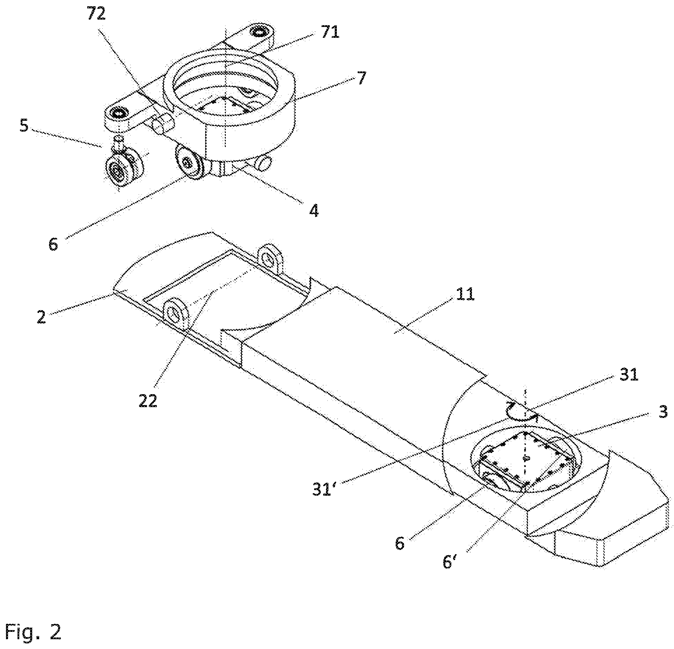

- Fig. 2: das erfindungsgemäße Antriebssystem und die Transporteinrichtung von Fig. 1 in einer Explosionsdarstellung mit aufgeschnittenem Transportgutträger in einer Schrägansicht von oben, ohne Transportgut und Basiseinheit;

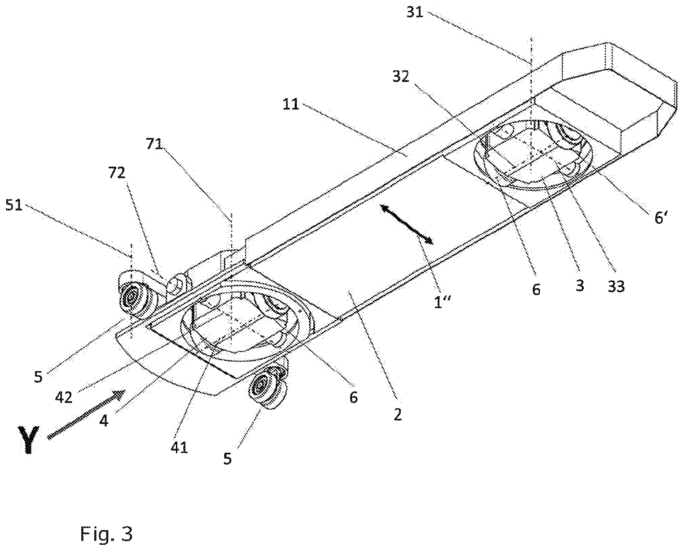

- Fig. 3: das erfindungsgemäße Antriebssystem und die Transporteinrichtung von Fig. 1 und Fig. 2 in einer Schrägansicht von unten, ohne Transportgut und Basiseinheit;

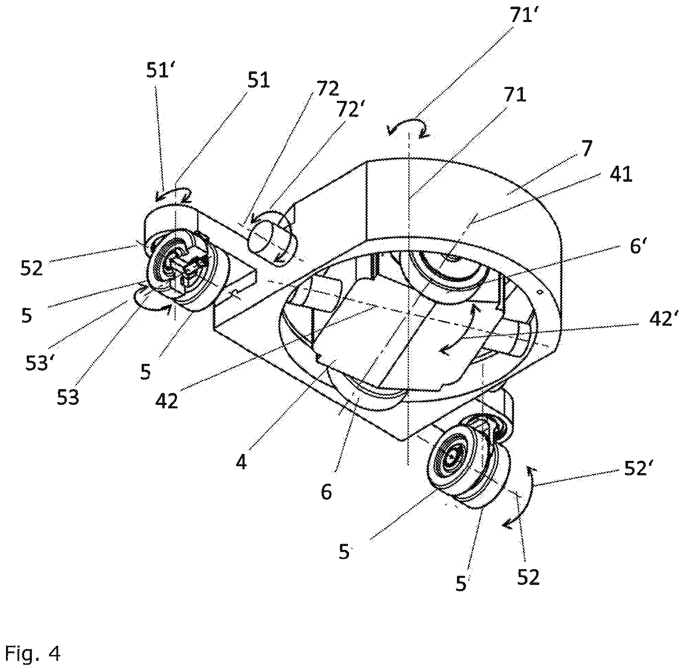

- Fig. 4: das erfindungsgemäße Antriebssystem mit Stützrädern von Fig. 1 bis Fig. 3 in einer Schrägansicht von unten;

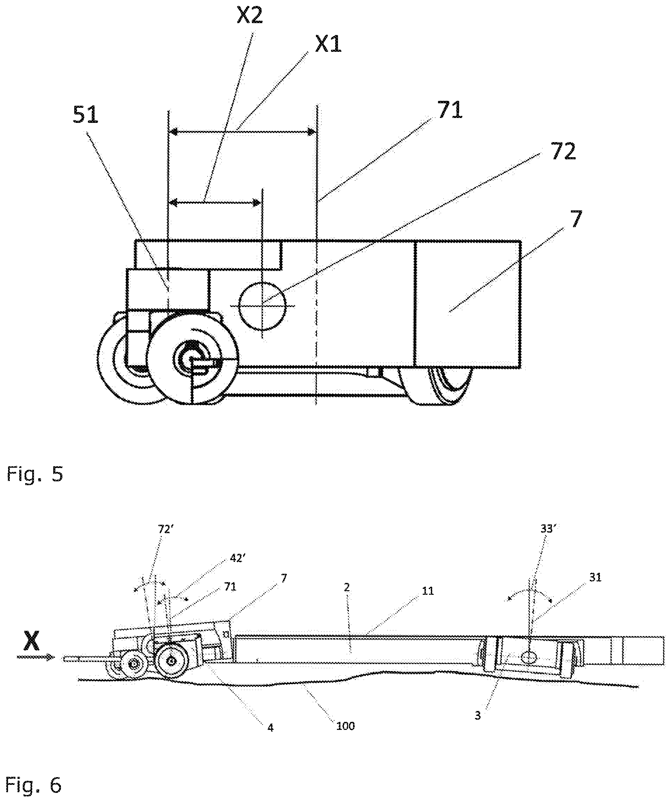

- Fig. 5: das erfindungsgemäße Antriebssystem mit Stützrädern von Fig. 1 bis Fig. 4 in einer Seitenansicht;

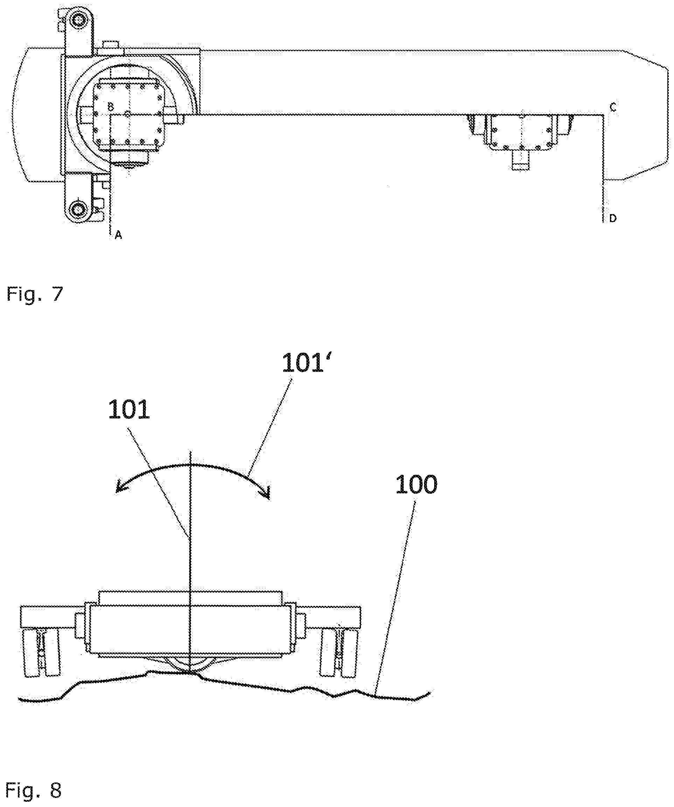

- Fig. 6: das erfindungsgemäße Antriebssystem und die Transporteinrichtung (ohne Transportgut und Basiseinheit) von Fig. 1 bis Fig. 5 auf unebener Fahrbahn in Schnittdarstellung A-B-C-D gem. Fig. 7;
- Fig. 7: das erfindungsgemäße Antriebssystem und die Transporteinrichtung (ohne Transportgut und Basiseinheit) von Fig. 1 bis Fig. 6 in einer Ansicht von oben, teilweise aufgeschnitten entlang Schnittlinie A-B-C-D;
- Fig. 8: eine Transporteinrichtung in einer Ansicht X von Fig. 6 mit blockierter Gehäuse-Kippachse 72;

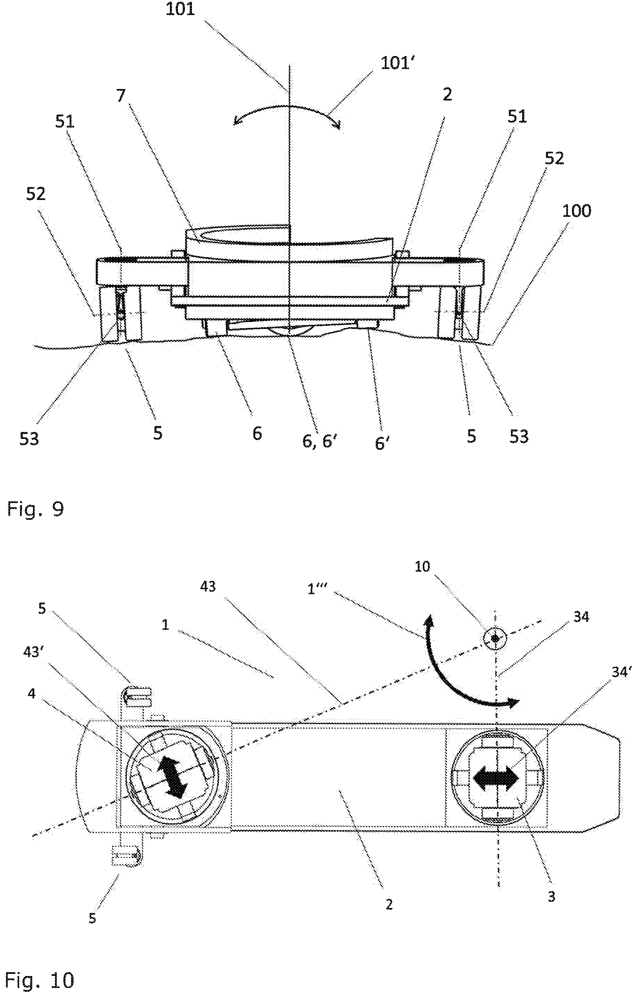

- Fig. 9: eine erfindungsgemäße Transporteinrichtung in einer Ansicht X von Fig. 6 mit frei beweglicher Gehäuse-Kippachse 72;
- Fig. 10: eine erfindungsgemäße Transporteinrichtung in einer Ansicht von unten in beliebiger Kurvenfahrt;

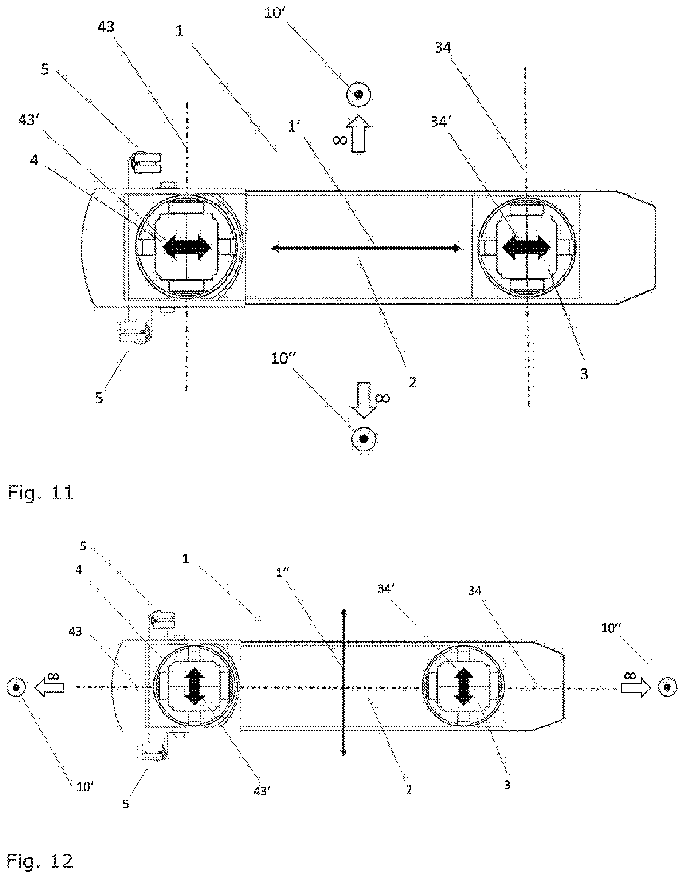

- Fig. 11: eine erfindungsgemäße Transporteinrichtung in einer Ansicht von unten in geradliniger Vor-/Rückwärtsfahrt;
- Fig. 12: eine erfindungsgemäße Transporteinrichtung in einer Ansicht von unten in geradliniger 90° Seitwärtsfahrt (Querfahrt);
- Fig. 13: schematisch eine erfindungsgemäße Transporteinrichtung mit Transportgut gemäß einer zweiten Ausführungsvariante der Erfindung in einer Ansicht entsprechend Fig. 9;
- Fig. 14: schematisch eine erfindungsgemäße Transporteinrichtung gemäß einer dritten Ausführungsvariante der Erfindung in einer seitlichen Ansicht.

Die erfindungsgemäße uneingeschränkt omnidirektional manövrierfähige Transporteinrichtung 1 dient zum automatischen, platzsparenden und kollisionsfreien Aufnehmen, Anheben, Befördern und Abgeben von Transportgütern 13, wobei das Befördern das präzise Verfahren des Transportgutes 13 von einem beliebigen ersten Punkt zu einem beliebigen zweiten Punkt entlang uneingeschränkter Trajektorien ist, ohne Zuhilfenahme zusätzlicher Einrichtungen. Die erfindungsgemäße uneingeschränkt omnidirektional manövrierfähige Transporteinrichtung 1 weist ein Fahrwerk/Fahrgestell 2 auf, auf dem ein Ladungsträger 11 angeordnet ist der ein Transportgut 13 aufnehmen und eine Vertikalhubbewegung 11' ausführen kann. Eine Basiseinheit 12 ist mit dem Fahrwerk/Fahrgestell 2 verbunden und beinhaltet im Wesentlichen die Steuerung, Energieversorgung, Teile der Sensorik, HMI-Schnittstellen, Kommunikationseinrichtungen und eine Schutzverkleidung. Mit dem Fahrwerk/Fahrgestell 2 mit einer Längsachse 1' sind mindes-tens eine erste Antriebseinheit 3 und mindestens eine zweite Antriebseinheit 4 verbunden, die entlang der Längsachse 1' angeordnet sind.

Die erste Antriebseinheit 3 weist eine vertikale Drehachse 31 auf, um die die erste Antriebseinheit 3 eine Drehbewegung 31' relativ zum Fahrwerk/Fahrgestell 2 ausführen kann, sie weist weiters mindestens ein Antriebsrad 6, vorzugsweise zwei Antriebsräder 6, 6' auf, mit einer, vorzugsweise einer gemeinsamen Drehachse 32, die vorzugsweise parallel zur Fahrbodenebene 100 ausgerichtet ist, auf, sie weist weiters eine Kippachse 33 auf, die vorzugsweise in einem 90° Winkel zur vertikalen Drehachse 31 ausgerichtet ist und in einer besonders bevorzugten Ausführungsvariante die Drehachse 32 in einem Winkel von vorzugsweise 90° schneidet. Damit ist die erste Antriebseinheit 3 relativ zum Fahrwerk/Fahr-gestell 2 um die vertikale Drehachse 31 frei um die Drehbewegung 31' drehbeweglich und die Antriebsräder 6, 6' sind entlang der verlängerten Drehachse 34 der Antriebsräder 6, 6' in Richtung 34' fahrbar. Eine Bodenunebenheit wird dabei durch eine Kippbewegung 33' relativ zum Fahrwerk/Fahrgestell 2 mittels der frei beweglichen Kippachse 33 ausgeglichen. Das Antriebsrad 6, vorzugsweise jedes Antriebsrad 6, 6' ist einzeln mittels eines Motors, vorzugsweise Elektromotor, antreibbar. In einer ersten Ausführungsvariante ist die Antriebseinheit 3 mit nur einem Antriebsrad 6 ausgeführt, sodass für die Richtungsänderung 31' um die vertikale Drehachse 31 ein separates Antriebssystem erforderlich ist. In der besonders bevorzugten Ausführungsvariante ist die Antriebseinheit 3 mit zwei Antriebsrädern 6, 6' ausgeführt und die Richtungsänderung 31' um die vertikale Drehachse 31 zur Bewegungsrichtung 34' erfolgt mittels Drehzahlanpassung bzw. Drehrichtungsänderung der einzelnen Antriebsräder 6, 6'.

Die erste und/oder die zweite Antriebseinheit 3, 4 ist auf einer Schulter 8 im Gehäuse drehbar und schwenkbar gelagert. Um die Antriebseinheit 3, 4 auch nach unten zu sichern, kann an Stelle der Schulter 8 auch eine Nut vorgesehen sein.

Die zweite Antriebseinheit 4 weist eine vertikale Drehachse 71 auf, um die die zweite Antriebseinheit 4 eine Drehbewegung 71' relativ zum Fahrwerk/Fahrgestell 2 ausführen kann, sie weist weiters mindestens ein Antriebsrad 6, vorzugsweise zwei Antriebsräder 6, 6' auf, mit einer, vorzugsweise einer gemeinsamen Drehachse 41, die vorzugsweise parallel zur Fahrbodenebene 100 ausgerichtet ist, auf, sie weist weiters eine Kippachse 42 auf, die vorzugsweise in einem 90° Winkel zur vertikalen Drehachse 71 ausgerichtet ist und in einer besonders bevorzugten Ausführungsvariante die Drehachse 71 in einem Winkel von vorzugsweise 90° schneidet. Damit ist die zweite Antriebseinheit 4 relativ zum Fahrwerk/Fahrgestell 2 um die vertikale Drehachse 71 frei um die Drehbewegung 71' drehbeweglich und die Antriebsräder 6, 6' sind entlang der verlängerten Drehachse 43 der Antriebsräder 6, 6' in Richtung 43' fahrbar. Eine Bodenunebenheit wird dabei durch eine Kippbewegung 42' relativ zum Gehäuse 7 der zweiten Antriebseinheit und relativ zum Fahrwerk/Fahrgestell 2 mittels der frei beweglichen Kippachse 42 ausgeglichen. Das Antriebsrad 6, vorzugsweise jedes Antriebsrad 6, 6' ist einzeln mittels eines Motors, vorzugsweise Elektromotor, antreibbar. In einer ersten Ausführungsvariante ist die Antriebseinheit 4 mit nur einem Antriebsrad 6 ausgeführt, sodass für die Richtungsänderung 71' um die vertikale Drehachse 71 ein separates Antriebssystem erforderlich ist. In der besonders bevorzugten Ausführungsvariante ist die Antriebseinheit 4 mit zwei Antriebsrädern 6, 6' ausgeführt und die Richtungsänderung 71' um die vertikale Drehachse 71 zur Bewegungsrichtung 43' erfolgt mittels Drehzahlanpassung bzw. Drehrichtungsänderung der einzelnen Antriebsräder 6, 6'.

Zwei Stützradeinheiten sind seitlich gegenüberliegend am Gehäuse 7 der zweiten Antriebseinheit 4 angeordnet. Eine Stützradeinheit besteht aus mindestens einem Stützrad 5, vorzugsweise aus zwei Stützrädern 5, die frei drehbar um die Stützrad-Drehachse 52 der Stützräder 5 gelagert sind und eine freie Drehbewegung 52' ausführen können. Sie sind weiteres frei drehbar um die vertikale Drehachse 51 gemäß Drehbewegung 51' gelagert und mit einer Kippachse 53 ausgeführt, die vorzugsweise in einem Winkel von 90° zur vertikalen Drehachse 51 angeordnet ist, damit die Stützräder 5 Bodenunebenheiten derart ausgleichen, dass die Stützrad-Drehachse 52 der Stützräder 5 sich frei parallel zur Fahrbahnebene 100 mittels der Kippbewegung 53' ausrichten kann und beide Stützräder 5 vollen Bodenkontakt aufweisen können. Die Kippachse 53 ist in vertikaler Richtung relativ zur Stützrad-Drehachse 52 der Stützräder 5 in einem Abstand kleiner als der halbe Durchmesser der Stützräder 5 vorzugsweise zwischen 0 und einem Viertel des Durchmessers der Stützräder 5 beabstandet und die vertikale Drehachse 51 der Stützräder 5 ist horizontal relativ zur Stützrad-Drehachse 52 der Stützräder 5 in einem Abstand kleiner als der Durchmesser der Stützräder 5 vorzugsweise zwischen einem Viertel und einem Ganzen des Durchmessers der Stützräder 5 beabstandet.

Das Gehäuse 7 der zweiten Antriebseinheit 4 weist eine Gehäuse-Kippachse 72 auf, die eine freie Kippbewegung 72' des Gehäuses 7 relativ zum Fahrwerk/Fahrgestell 2 ermöglicht, durch die Gegenlagerung 22 im Fahrwerk/Fahrgestell 2, wobei die Gegenlagerung 22 im Wesentlichen in einem Winkel von 90° zu der Ebene, die die beiden vertikalen Drehachsen 31 und 71 der Antriebseinheiten 3 und 4 verbindet, ausgerichtet ist und parallel zum Fahrwerk/Fahrgestell 2 ausgerichtet ist. Die Gehäuse-Kippachse 72 ist in horizontaler Richtung von der vertikalen Drehachse 51 der Stützräder 5 und von der vertikalen Drehachse 71 der zweiten Antriebseinheit im Abstand X2 beabstandet und mit dem Abstand X1 ist in der horizontalen Richtung die vertikale Drehachse 51 der Stützräder 5 von der vertikalen Drehachse 71 beabstandet, wobei X1 > X2 ist, vorzugsweise liegt X2 zwischen 0 und 0,75 x X1.

Damit ist eine uneingeschränkt omnidirektionale und präzise Beweglichkeit der Transporteinrichtung 1 bei vollem Bodenkontakt aller Antriebsräder 6, 6' der ersten Antriebseinheit 3 und der zweiten Antriebseinheit 4 und voller Bodenkontakt aller Stützräder 5 auf unebenem Fahrboden 100 bzw. bei Vorhandensein von Fremdkörpern auf dem Fahrboden 100 möglich, indem die vertikale Drehachse 31 der ersten Antriebseinheit 3 relativ zum Fahrwerk/Fahrgestell 2 frei in Richtung 33' pendeln kann und die vertikale Drehachse 71 der zweiten Antriebseinheit 4 frei relativ zum Gehäuse 7 in Richtung 42' pendeln kann und das Gehäuse 7 mit den Stützradeinheiten 5 frei relativ zum Fahrwerk/Fahrgestell 2 in Richtung 72' pendeln kann. Für die Geradeausfahrt der Transporteinrichtung 1 sind die verlängerten Drehachsen 34 der ersten Antriebseinheit 3 und die verlängerten Drehachsen 43 der zweiten Antriebseinheit 4 parallel und in einem Winkel 90° zur Fahrtrichtung ausgerichtet, die Fluchtpunkte 10', 10" befinden sich seitlich im Unendlichen, für die Seitwärtsfahrt der Transporteinrichtung 1 sind die verlängerten Drehachsen 34 der ersten Antriebseinheit 3 und die verlängerten Drehachsen 43 der zweiten Antriebseinheit 4 parallel in Längsrichtung sich deckend und in einem Winkel 90° zur seitlichen Fahrtrichtung ausgerichtet, die Fluchtpunkte 10', 10" befinden sich in Längsrichtung im Unendlichen, für eine beliebige Kurvenfahrt der Transporteinrichtung 1 sind die verlängerten Drehachsen 34 der ersten Antriebseinheit 3 und die verlängerten Drehachsen 43 der zweiten Antriebseinheit 4 derart ausgerichtet, dass sie sich in einem gemeinsamen Fluchtpunkt 10 treffen und um diesen eine aktuelle Drehbewegung ausführen.

Es kann auch vorgesehen sein, dass zur Richtungsänderung der ersten Antriebseinheit 3 in einer ersten Ausführungsvariante die Antriebseinheit 3 mit nur einem Antriebsrad 6 ausgeführt ist und für die Richtungsänderung 31' um die vertikale Drehachse 31 ein separates Antriebssystem aufweist, während in der besonders bevorzugten Ausführungsvariante die Antriebseinheit 3 mit zwei Antriebsrädern 6, 6' ausgeführt ist und die Richtungsänderung 31' um die vertikale Drehachse 31 zur Bewegungsrichtung 34' mittels Drehzahlanpassung bzw. Drehrichtungsänderung der einzelnen Antriebsräder 6, 6' erfolgt.

Es ist auch möglich, dass zur Richtungsänderung der zweiten Antriebseinheit 4 in einer ersten Ausführungsvariante die Antriebseinheit 4 mit nur einem Antriebsrad 6 ausgeführt ist und für die Richtungsänderung 71' um die vertikale Drehachse 71 ein separates Antriebssystem aufweist, während in der besonders bevorzugten Ausführungsvariante die Antriebseinheit 4 mit zwei Antriebsrädern 6, 6' ausgeführt und die Richtungsänderung 71' um die vertikale Drehachse 71 zur Bewegungsrichtung 43' mittels Drehzahlanpassung bzw. Drehrichtungsänderung der einzelnen Antriebsräder 6, 6' erfolgt.

Das Fahrwerk/Fahrgestell 2 kann beliebig ausgeführt sein, vorzugsweise einschenkelig bzw. einkufig, aber auch eine zweischenkelige oder U-förmige Form aufweisen kann.

Es ist auch bevorzugt, dass für die Geradeausfahrt der Transporteinrichtung 1 die verlängerten Drehachsen 34 der ersten Antriebseinheit 3 und die verlängerten Drehachsen 43 der zweiten Antriebseinheit 4 parallel und in einem Winkel 90° zur Fahrtrichtung ausgerichtet sind und die Fluchtpunkte 10', 10" sich seitlich im Unendlichen erstrecken und für die Seitwärtsfahrt der Transporteinrichtung 1 die verlängerten Drehachsen 34 der ersten Antriebseinheit 3 und die verlängerten Drehachsen 43 der zweiten Antriebseinheit 4 parallel in Längsrichtung sich deckend und in einem Winkel 90° zur seitlichen Fahrtrichtung ausgerichtet sind und die Fluchtpunkte 10', 10" sich in Längsrichtung im Unendlichen befinden und für eine beliebige Kurvenfahrt der Transporteinrichtung 1 die verlängerten Drehachsen 34 der ersten Antriebseinheit 3 und die verlängerten Drehachsen 43 der zweiten Antriebseinheit 4 sich in einem gemeinsamen Fluchtpunkt 10 schneiden und um diesen eine aktuelle Drehbewegung 1‴ ausführen.

Bevorzugt weist die Transporteinrichtung 1 eine Basiseinheit 12 auf, die mit dem Fahrwerk/Fahrgestell 2 verbunden ist und die im Wesentlichen die Steuerung, Energieversorgung, Teile der Sensorik, HMI-Schnittstellen und Kommunikationseinrichtungen aufnimmt und die vorzugsweise eine Schutzverkleidung aufweist.

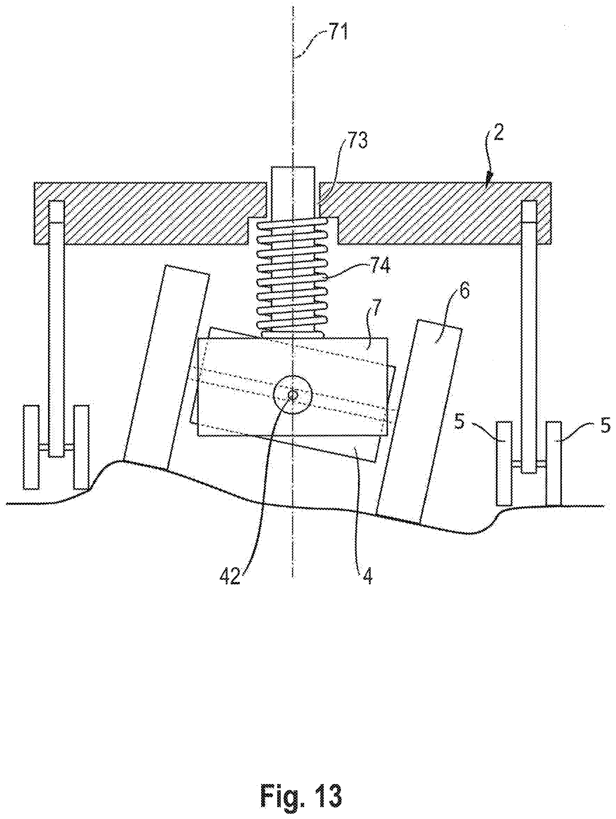

Bei der Ausführungsvariante von Fig. 13 ist das Gehäuse 7 über ein Linearlager 73 vertikal verschiebbar und verdrehbar um die vertikale Achse 71 gelagert und über eine Feder 74 nach unten vorgespannt, um die Antriebsräder 6 zur Fahrbahn zu drücken.

Die Stützräder 5 sind direkt am Fahrgestell 2 gelagert und in der gleichen Weise beweglich wie in der ersten Ausführungsvariante.

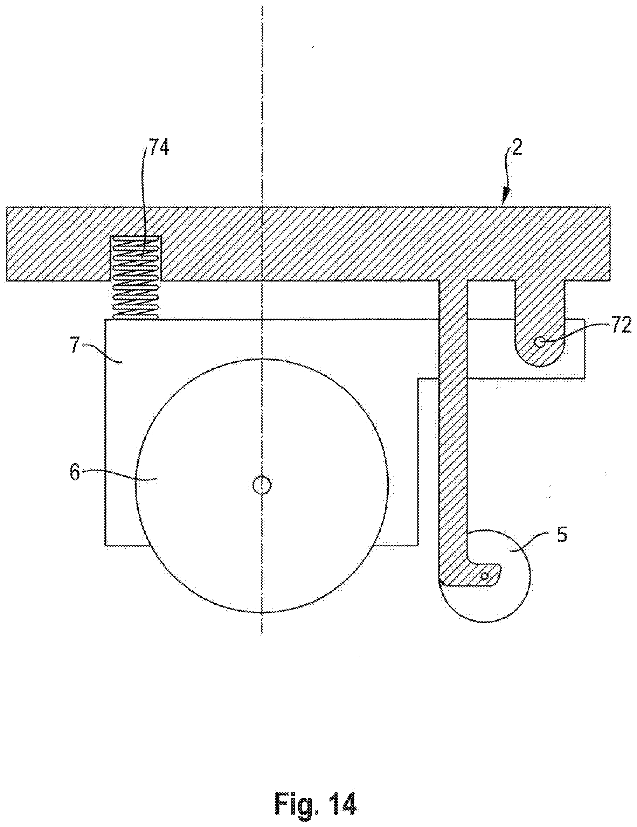

Bei der Ausführungsvariante von Fig. 14 ist das Gehäuse 7 um eine horizontale Achse, die Gehäuse-Kippachse 72, schwenkbar gelagert und analog zu der Ausführungsvariante von Fig. 13 durch eine Feder 74 nach unten vorgespannt, um die Antriebsräder 6 zur Fahrbahn zu drücken.

## Patentansprüche

1. Antriebssystem für autonom betreibbare Transporteinrichtungen, mit einem Fahrgestell (2), mit einer ersten und einer zweiten Antriebseinheit (3, 4), die entlang einer Längsachse (1') des Fahrgestells (2) hintereinander angeordnet sind, wobei die erste und die zweite Antriebseinheit (3, 4) jeweils um eine in Gebrauchslage im Wesentlichen senkrechte Drehachse (31, 71) drehbar gelagert sind, wobei zumindest die zweite Antriebseinheit (4) in einem Gehäuse (7) drehbar gelagert ist, das am Fahrgestell (2) gelagert ist, und dass beidseits der Längsachse (1') des Fahrgestells (2) Stützräder (5) angeordnet sind, **dadurch gekennzeichnet, dass** das Gehäuse (7) um eine sich quer zur Längsachse (1') des Fahrgestells (2) erstreckende Gehäuse-Kippachse (72) schwenkbar am Fahrgestell (2) gelagert ist.

2. Antriebssystem nach Anspruch 1, **dadurch gekennzeichnet, dass** die Stützräder (5) am Gehäuse (7) angeordnet sind.

3. Antriebssystem nach einem der Ansprüche 1 oder 2, **dadurch gekennzeichnet, dass** die erste und/oder die zweite Antriebseinheit (3, 4) in einem um die senkrechte Drehachse (31, 71) drehbaren Ringelement um eine Kippachse (33, 42) schwenkbar gelagert ist.

4. Antriebssystem nach einem der Ansprüche 1 bis 3, **dadurch gekennzeichnet, dass** die erste und/oder die zweite Antriebseinheit (3, 4) gegenüber dem Gehäuse (7) durch mindestens eine Stützrolle radial abgestützt ist.

5. Antriebssystem nach einem der Ansprüche 1 bis 4, **dadurch gekennzeichnet, dass** die Kippachsen (33, 42) jeweils normal auf die Drehachsen (32, 41) von an der Antriebseinheit (3, 4) angeordneten Antriebsrädern (6, 6') stehen.

6. Antriebssystem nach einem der Ansprüche 1 bis 5, **dadurch gekennzeichnet, dass** die Stützräder (5) jeweils um eine vertikale Drehachse (51) gegenüber dem Gehäuse (7) schwenkbar sind.

7. Antriebssystem nach Anspruch 6, **dadurch gekennzeichnet, dass** die Stützräder (5) um eine Stützrad-Drehachse (52) drehbar sind, die die vertikale Drehachse (51) in einem Abstand kreuzt.

8. Antriebssystem nach einem der Ansprüche 6 oder 7, **dadurch gekennzeichnet, dass** jeweils zwei koaxiale Stützräder (5) gemeinsam um die vertikale Drehachse (51) drehbar sind.

9. Antriebssystem nach Anspruch 8, **dadurch gekennzeichnet, dass** die beiden koaxialen Stützräder (5) unabhängig voneinander um die Stützrad-Drehachse (52) drehbar sind.

10. Antriebssystem nach einem der Ansprüche 6 bis 9, **dadurch gekennzeichnet, dass** die vertikale Drehachse (51) einen Abstand (X2) zu der Gehäuse-Kippachse (72) aufweist, der kleiner ist als der Abstand (X1) der vertikalen Drehachse (51) zu der senkrechten Drehachse (71).

11. Antriebssystem nach einem der Ansprüche 6 bis 10, **dadurch gekennzeichnet, dass** die Stützräder (5) um eine im Wesentlichen horizontale Kippachse (53) kippbar sind.

12. Antriebssystem nach einem der Ansprüche 1 bis 11, **dadurch gekennzeichnet, dass** die erste und/oder die zweite Antriebseinheit (3, 4) jeweils zwei unabhängig voneinander antreibbare Antriebsräder (6, 6') aufweisen.

13. Antriebssystem nach einem der Ansprüche 1 bis 12, **dadurch gekenneichnet, dass** das Gehäuse (7) vertikal beweglich und vorzugsweise gefedert gegenüber dem Fahrgestell (2) gelagert ist.

14. Antriebssystem nach einem der Ansprüche 1 bis 13, **dadurch gekennzeichnet, dass** die Stützräder (5) seitlich am Fahrgestell (2) angeordnet sind und jeweils um eine vertikale Drehachse (51) gegenüber dem Fahrgestell (2) schwenkbar sind.

15. Transporteinrichtung mit einem Antriebssystem nach einem der Ansprüche 1 bis 14, **dadurch gekennzeichnet, dass** ein Ladungsträger (11) vorgesehen ist, der gegenüber dem Antriebssystem vertikal beweglich ist und dass vorzugsweise eine Basiseinheit vorgesehen ist, die eine Steuerungseinheit und/ oder eine Energieversorgungsseinheit aufnimmt.

## Claims

1. Drive system for autonomously operable transport devices, comprising a chassis (2), comprising a first and a second drive unit (3, 4) arranged one behind the other along a longitudinal axis (1') of the chassis (2), wherein the first and the second drive unit (3, 4) are each rotatably mounted about an axis of rotation (31, 71) that is substantially vertical in an in-use position, wherein at least the second drive unit (4) is rotatably mounted in a housing (7) which is mounted on the chassis (2), and that support wheels (5) are arranged on both sides of the longitudinal axis (1') of the chassis (2), **characterised in that** the housing (7) is pivotably mounted on the chassis (2) about a housing tilt axis (72) extending transversely to the longitudinal axis (1') of the chassis (2).

2. Drive system according to claim 1, **characterised in that** the support wheels (5) are arranged on the housing (7).

3. Drive system according to one of claims 1 or 2, **characterised in that** the first and/or the second drive unit (3, 4) is pivotably mounted about a tilt axis (33, 42) in a ring element rotatable about the vertical axis of rotation (31, 71).

4. Drive system according to one of claims 1 to 3, **characterised in that** the first and/or the second drive unit (3, 4) is radially supported relative to the housing (7) by at least one support roller.

5. Drive system according to one of claims 1 to 4, **characterised in that** the tilt axes (33, 42) are disposed in each case normal to the axes of rotation (32, 41) of drive wheels (6, 6') arranged on the drive unit (3, 4).

6. Drive system according to one of claims 1 to 5, **characterised in that** the support wheels (5) are each pivotable about a vertical axis of rotation (51) relative to the housing (7).

7. Drive system according to claim 6, **characterised in that** the support wheels (5) are rotatable about a support wheel axis of rotation (52) which intersects the vertical axis of rotation (51) at a distance.

8. Drive system according to one of claims 6 or 7, **characterised in that** two coaxial support wheels (5) respectively are jointly rotatable about the vertical axis of rotation (51).

9. Drive system according to claim 8, **characterised in that** the two coaxial support wheels (5) are rotatable independently of one another about the support wheel axis of rotation (52).

10. Drive system according to one of claims 6 to 9, **characterised in that** the vertical axis of rotation (51) is at a distance (X2) from the housing tilt axis (72) which is smaller than the distance (X1) of the vertical axis of rotation (51) from the vertical axis of rotation (71).

11. Drive system according to one of claims 6 to 10, **characterised in that** the support wheels (5) are tiltable about a substantially horizontal tilt axis (53).

12. Drive system according to one of claims 1 to 11, **characterised in that** the first and/or the second drive unit (3, 4) each comprises two mutually independently drivable drive wheels (6, 6').

13. Drive system according to one of claims 1 to 12, **characterised in that** the housing (7) is mounted so as to be vertically movable and preferably spring-mounted relative to the chassis (2).

14. Drive system according to one of claims 1 to 13, **characterised in that** the support wheels (5) are arranged laterally on the chassis (2) and are each pivotable about a vertical axis of rotation (51) relative to the chassis (2).

15. Transport device comprising a drive system according to one of claims 1 to 14, **characterised in that** a load carrier (11) is provided which is vertically movable relative to the drive system, and **in that** preferably a base unit is provided which accommodates a control unit and/or a power supply unit.

## Revendications

1. Système de propulsion pour des installations de transport pouvant fonctionner de façon autonome, avec un châssis (2), avec une première unité de propulsion et une deuxième (3, 4) qui sont disposées l'une à la suite de l'autre le long d'un axe longitudinal (1') du châssis (2), dans lequel la première unité de propulsion et la deuxième (3, 4) sont supportées avec possibilité de rotation autour d'un axe de rotation respectif (31, 71) sensiblement vertical dans la position d'utilisation, dans lequel au moins la deuxième unité de propulsion (4) est supportée avec possibilité de rotation dans un coffre (7) qui est supporté sur le châssis (2), et dans lequel des roues d'appui (5) sont disposées de part et d'autre de l'axe longitudinal (1') du châssis (2), **caractérisé en ce que** le coffre (7) est supporté sur le châssis (2) avec possibilité de basculement autour d'un axe de basculement du coffre (72) qui s'étend transversalement par rapport à l'axe longitudinal (1') du châssis (2).

2. Système de propulsion selon la revendication 1, **caractérisé en ce que** les roues d'appui (5) sont disposées sur le coffre (7).

3. Système de propulsion selon l'une des revendications 1 ou 2, **caractérisé en ce que** la première unité de propulsion et/ou la deuxième (3, 4) sont supportées de façon pivotante autour d'un axe de basculement (33, 42) dans un segment annulaire capable de rotation autour de l'axe de rotation vertical (31, 71).

4. Système de propulsion selon l'une des revendications 1 à 3, **caractérisé en ce que** la première unité de propulsion et/ou la deuxième (3, 4) sont supportées dans le sens radial vis-à-vis du coffre (7) par au moins un galet d'appui.

5. Système de propulsion selon l'une des revendications 1 à 4, **caractérisé en ce que** les axes de basculement (33, 42) sont perpendiculaires respectivement aux axes de rotation (32, 41) de roues motrices (6, 6') disposées sur l'unité de propulsion (3, 4).

6. Système de propulsion selon l'une des revendications 1 à 5, **caractérisé en ce que** les roues d'appui (5) sont capables de pivoter chacune par rapport au coffre (7) autour d'un axe de rotation vertical (51).

7. Système de propulsion selon la revendication 6, **caractérisé en ce que** les roues d'appui (5) sont capables de rotation autour d'un axe de rotation de roue d'appui (52) qui croise l'axe de rotation vertical (51) à distance.

8. Système de propulsion selon l'une des revendications 6 ou 7, **caractérisé en ce que** deux roues d'appui (5) coaxiales respectives sont capables de tourner ensemble autour de l'axe de rotation vertical (51).

9. Système de propulsion selon la revendication 8, **caractérisé en ce que** les deux roues d'appui (5) coaxiales sont capables de rotation indépendamment l'une de l'autre autour de l'axe de rotation de roue d'appui (52).

10. Système de propulsion selon l'une des revendications 6 à 9, **caractérisé en ce que** l'axe de rotation vertical (51) présente par rapport à l'axe de basculement du coffre (72) une distance (X2) qui est inférieure à la distance (X1) entre l'axe de rotation vertical (51) et l'axe de rotation vertical (71).

11. Système de propulsion selon l'une des revendications 6 à 10, **caractérisé en ce que** les roues d'appui (5) sont capables de basculement autour d'un axe de basculement (53) sensiblement horizontal.

12. Système de propulsion selon l'une des revendications 1 à 11, **caractérisé en ce que** la première unité de propulsion et/ou la deuxième (3, 4) comportent chacune deux roues motrices (6, 6') pouvant être entraînées indépendamment l'une de l'autre.

13. Système de propulsion selon l'une des revendications 1 à 12, **caractérisé en ce que** le coffre (7) est supporté de façon mobile verticalement et, de préférence, suspendu par rapport au châssis (2).

14. Système de propulsion selon l'une des revendications 1 à 13, **caractérisé en ce que** les roues d'appui (5) sont disposées latéralement sur le châssis (2) et peuvent pivoter chacune autour d'un axe de rotation vertical (51) par rapport au châssis (2).

15. Installation de transport munie d'un système de propulsion selon l'une des revendications 1 à 14, **caractérisée en ce qu'**est prévu un support de charge (11) qui est mobile verticalement par rapport au système de propulsion et **en ce qu'**est de préférence prévue une unité de base qui reçoit une unité de commande et/ou une unité d'alimentation en énergie.
